# FASCICULE DE BREVET EUROPEEN

(11) **EP 3 849 056 B1**
(45) Date de publication et mention de la délivrance du brevet: **10.12.2025**
(21) Numéro de dépôt: 20315003.2
(22) Date de dépôt: 08.01.2020
(51) Int. Cl.: H02K 1/20, H02K 9/10, H02K 9/18, H02K 9/19

(54) **REFROIDISSEMENT D'UN STATOR D'UNE MACHINE ÉLECTRIQUE TOURNANTE ET MACHINE ÉLECTRIQUE TOURNANTE ASSOCIÉE**
FLUIDKÜHLUNG EINES STATORS EINER ROTIERENDEN ELEKTRISCHEN MASCHINE UND ENTSPRECHENDE ROTIERENDE ELEKTRISCHE MASCHINE
COOLING OF A STATOR OF A ROTATING ELECTRIC MACHINE AND RELATED ROTATING ELECTRIC MACHINE

(43) Date de publication de la demande: 14.07.2021
(73) Titulaire: GE Energy Power Conversion Technology Ltd, Rugby, Warwickshire CV21 1BD (GB)
(72) Inventeur: VELLY, Nicolas, 54390 Frouard (FR); DONTENVILLE, Tristan, 54250 Champigneulles (FR); GALMICHE, Christophe, 54200 Toul (FR); BIRI, Clément, 54250 Champigneulles (FR); DURANTAY, Lionel, 54390 Frouard (FR); SVETTI, Federico, 54250 Champigneulles (FR)
(74) Mandataire: Casalonga

(56) Documents cités:
- EP-A2- 2 975 734
- WO-A1-03/012955
- DE-A1- 102007 021 723
- US-A1- 2018 054 096
- US-A1- 2019 229 566

## Description

La présente invention concerne les stators refroidis de manière bilatérale.

La présente invention concerne également une machine électrique tournante comprenant un tel stator et un motocompresseur intégré comprenant une telle machine électrique tournante.

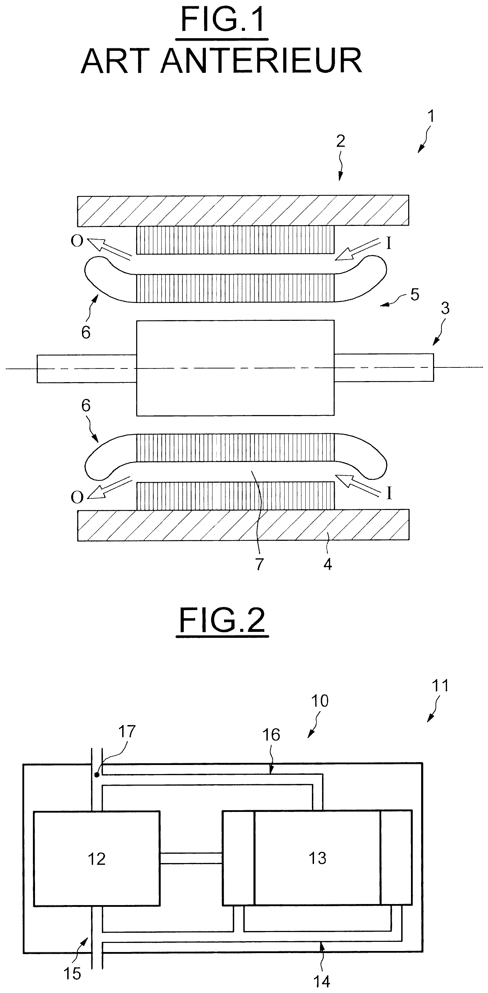

La figure 1 illustre une machine électrique 1 tournante refroidie de façon unilatérale selon l'état de la technique.

La machine 1 comprend un stator 2 dans lequel est inséré un rotor 3.

Le stator 2 comprend une carcasse 4 logeant une masse magnétique 5 formée par des tôles magnétiques compactées. Des bobines 6 sont insérées dans des encoches de la masse magnétique 5.

Selon le mode de fonctionnement de la machine électrique tournante, la puissance mécanique ou électrique générée est dégradée par l'échauffement des bobines 6.

Afin d'améliorer ladite puissance, il est nécessaire de refroidir la masse magnétique et par conséquent les bobines 6.

La masse magnétique comprend des canaux longitudinaux 7 dans lesquels circulent un fluide de refroidissement, par exemple un liquide ou un gaz.

Le fluide est injecté à une première extrémité I du stator, et circule dans l'entrefer de la machine 1 et dans les canaux 7.

Au fur et à mesure de la progression du fluide dans la masse magnétique 5, le fluide s'échauffe et sort à une seconde extrémité O du stator.

Cependant, le fluide échauffé ne refroidit plus suffisamment la deuxième extrémité O de sorte qu'au moins un point chaud apparaît dans la masse magnétique 5 et échauffe les têtes des bobines 6 situées à la deuxième extrémité, dégradant l'efficacité de la machine électrique tournante.

Le document US 9,831,746 divulgue un stator comprenant une masse magnétique traversée par des canaux longitudinaux reliés à un canal radial ou central.

Un fluide de refroidissement est injecté dans le canal central pour refroidir la masse magnétique.

Cependant, selon la longueur du stator, l'alimentation des canaux longitudinaux par un seul canal radial ou central n'est pas suffisante pour maintenir la température de la masse magnétique à une valeur acceptable pour améliorer les performances de la machine électrique tournante.

Le document US 2015/0288231 divulgue un stator comprenant une masse magnétique traversée par des canaux longitudinaux reliés à un canal radial.

Un fluide est injecté de part et d'autre de la masse magnétique et s'écoule en dehors du stator par le canal radial.

Cependant, une telle configuration ne permet pas de réguler avec précision la répartition de la température au sein de la masse magnétique.

On pourra également se référer aux documents JP 4864492 et JP 2011-175009 qui divulguent un stator comprenant une masse magnétique dont la périphérie extérieure est refroidie.

Une telle configuration ne permet pas non plus de réguler avec précision la répartition de la température au sein de la masse magnétique.

Le document JP 2007-116792 divulgue un stator comportant des tôles magnétiques compactées formant des paquets de tôles séparés par des conduites configurées pour faire circuler un fluide.

Cependant, une telle configuration ne permet pas davantage de réguler avec précision la répartition de la température.

En outre, les sections de passage du fluide du stator sont fixes et dimensionnées pour un fonctionnement nominal de la machine tournante de sorte que si les conditions de fonctionnement de la machine électrique sont modifiées telles que la vitesse de rotation ou la modification des caractéristiques du fluide de refroidissement circulant dans le stator, il est difficile d'adapter la capacité de refroidissement de la machine électrique tournante.

Il est donc proposé de pallier tout ou partie des inconvénients des stators selon l'état de la technique, notamment en améliorant la régulation de la température du stator indépendamment des caractéristiques du fluide circulant dans le stator.

Au vu de ce qui précède, il est proposé un stator pour machine électrique tournante comprenant une carcasse statorique et une masse magnétique cylindrique insérée dans la carcasse statorique, la masse magnétique comportant une pluralité d'empilements de tôles magnétiques compactées et des canaux longitudinaux répartis uniformément sur au moins un diamètre de la masse magnétique, les canaux débouchant de chaque côté de la masse magnétique.

Au moins trois paquets de tôles magnétiques compactées sont séparés par des distanceurs formant deux conduits d'évacuation s'étendant circonférentiellement et radialement entre la carcasse statorique et un logement central du stator destiné à accueillir un rotor de la machine électrique tournante et communiquant avec les canaux, la carcasse statorique comprenant au moins deux ouvertures d'évacuation reliées à des conduits différents de sorte qu'un fluide injecté de part et d'autre de la masse magnétique s'échappe du stator par les conduits d'évacuation, la section de passage de fluide des conduits d'évacuation étant configurée pour modifier la distribution de température dans la masse magnétique.

Selon une caractéristique, chaque conduit est relié à une pluralité d'ouvertures disposées sur un diamètre de la carcasse statorique.

De préférence, les ouvertures sont réparties selon au moins une génératrice de la carcasse statorique.

Avantageusement, les génératrices sont disposées uniformément sur un diamètre de la carcasse statorique.

Selon une autre caractéristique, l'épaisseur d'au moins un paquet de tôles magnétiques est différente de l'épaisseur des autres paquets de tôles magnétiques.

Avantageusement, les distanceurs sont de tailles différentes de sorte que les conduits d'évacuation sont de tailles différentes, chaque ouverture étant sensiblement égale ou supérieure à la section du conduit d'évacuation relié à ladite ouverture.

De préférence, la masse magnétique comprend en outre au moins une rainure longitudinale débouchant sur une superficie externe de la masse magnétique, ladite rainure étant configurée pour canaliser le fluide des conduits d'évacuation vers les ouvertures.

Selon encore une autre caractéristique, le stator comprend en outre au moins un collecteur ayant des branches reliées à des ouvertures différentes disposées sur une même génératrice de la carcasse statorique, la surface de passage de fluide de chaque branche étant sensiblement égale ou supérieure à la surface de passage de fluide l'ouverture reliée à ladite branche, chaque branche comprenant un premier moyen de régulation configuré pour contrôler le débit de fluide s'écoulant à travers ladite branche et le collecteur comprenant une sortie pour évacuer le fluide du stator.

Avantageusement, le stator comprend au moins une première chambre collectrice s'étendant selon une direction longitudinale et collectant le fluide s'écoulant à travers chaque ouverture disposée selon une même génératrice de la masse magnétique, la première chambre collectrice comprenant une sortie pour évacuer le fluide hors du stator et un premier moyen de régulation configuré pour contrôler le débit de fluide circulant par ladite sortie.

De préférence, le stator comprend une deuxième chambre collectrice englobant la carcasse statorique et configurée pour collecter le fluide s'écoulant à travers chaque ouverture, la deuxième chambre comprenant au moins une sortie pour évacuer le fluide hors du stator.

Avantageusement, chaque ouverture est relié à la deuxième chambre collectrice par l'intermédiaire d'un premier moyen de régulation configuré pour contrôler le débit de fluide circulant à travers ladite ouverture.

Selon encore une autre caractéristique, la deuxième chambre collectrice comprend au moins une deuxième sortie et un deuxième moyen de régulation configuré pour contrôler le débit de fluide circulant à travers la deuxième sortie.

De préférence, le premier moyen de régulation et le cas échéant le deuxième moyen de régulation comprennent chacun une vanne de régulation ou une section de passage de fluide calibrée à une valeur prédéterminée pour une pression prédéterminée ou une température prédéterminée.

Selon un autre aspect, il est proposé une machine électrique tournante comprenant un stator tel que défini précédemment.

Selon encore un autre aspect, il est proposé un motocompresseur intégré comprenant un carter étanche contenant une section de compression et une machine électrique tournante telle que définie précédemment et entraînant la section de compression.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1, dont il a déjà été fait mention, illustre une machine électrique tournante selon l'état de la technique ;
- la figure 2 illustre un exemple de mode de réalisation d'un motocompresseur intégré ;
- les figures 3 et 4 illustrent un premier mode de réalisation d'une machine électrique tournante ;
- la figure 5 illustre un deuxième mode de réalisation de la machine électrique tournante ;
- la figure 6 illustre un troisième mode de réalisation de la machine électrique tournante ; et
- les figures 7 et 8 illustrent un exemple de la machine électrique tournante non compris dans l'invention revendiquée.

On se réfère à la figure 2 qui illustre une demi-coupe longitudinale d'un exemple de motocompresseur 10 intégré comprenant un carter étanche 11 contenant une section de compression 12 et une machine électrique tournante 13 entraînant la section de compression 12.

La machine électrique tournante 13 est refroidie par des moyens de refroidissement 14 diffusant un fluide dans la machine électrique 13 pour fournir un refroidissement de type bilatéral.

Le fluide alimentant les moyens 14 est par exemple prélevé à une sortie 15 de la section de compression 12, par exemple à la sortie de la première roue de compression.

Le fluide est par exemple un gaz ou un liquide.

La machine électrique 13 comprend une sortie 16 pour évacuer le fluide injecté par les moyens de refroidissement 14 aux deux extrémités de la machine 13.

La sortie 16 peut être reliée à une entrée 17 de la section de compression 12, par exemple à l'entrée de la première roue de compression.

La température d'un stator 18 de la machine électrique tournante 13, est régulée par l'injection d'une fraction du fluide entrant dans la section de compression 12 de manière à contrôler la température d'au moins un point chaud du stator 18 situé généralement dans une zone centrale du stator.

En variante, la température du stator 18 de la machine électrique tournante 13 est régulée par l'injection d'un fluide provenant d'une source de fluide extérieure à la section de compression 12.

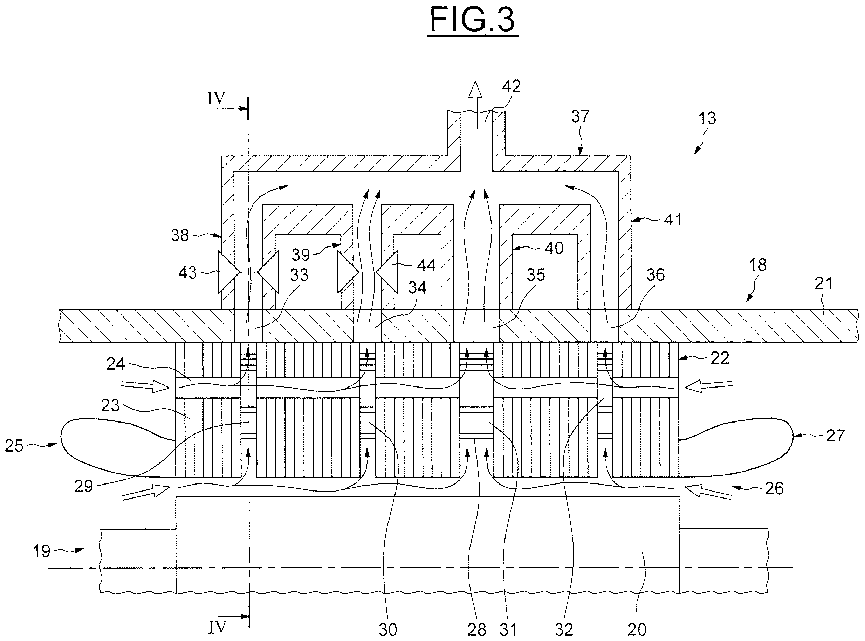

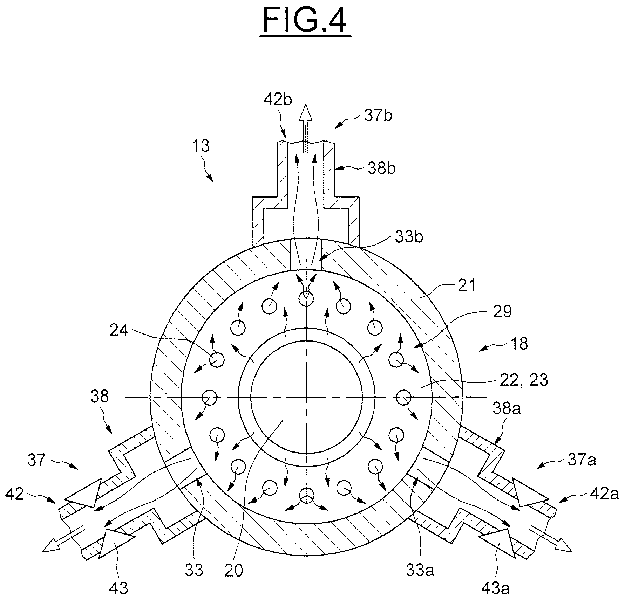

Les figures 3 et 4 illustrent une coupe longitudinale et une coupe transversale selon la direction IV-IV d'un premier mode de réalisation de la machine électrique tournante 13.

La machine électrique 13 comprend un stator 18 comprenant un logement central 19 logeant un rotor 20 de la machine 13.

Le stator 18 comprend une carcasse statorique 21 et une masse magnétique cylindrique 22 insérée dans la carcasse statorique.

La masse magnétique 22 comporte une pluralité d'empilements de tôles magnétiques 23 compactées et des canaux longitudinaux 24 répartis uniformément sur au moins un diamètre de la masse magnétique, les canaux débouchant de chaque côté 25 et 26 de la masse magnétique.

Les tôles magnétiques 23 peuvent en outre comporter des encoches dans lesquelles sont insérées des bobines statoriques 27.

Des paquets de tôles magnétique 23 sont séparés par des distanceurs 28 pour former des conduits d'évacuation 29, 30, 31 et 32 s'étendant circonférentiellement et radialement entre la carcasse statorique 21 et le logement central 19 du stator.

Les distanceurs 28 sont par exemple des pions.

Les paquets de tôles peuvent être de même épaisseur ou d'épaisseurs différentes.

Les conduits d'évacuation 29, 30, 31 et 32 communiquent avec les canaux longitudinaux 24.

Bien que quatre conduits d'évacuation soient représentés, il est suffisant que le stator 18 comporte au moins deux conduits d'évacuation.

La carcasse statorique 21 comprend des ouvertures 33, 34, 35 et 36 d'évacuation reliées respectivement à des conduits d'évacuation différents 29, 30, 31, 32 de sorte que le fluide injecté par les moyens 14 de part et d'autre de la masse magnétique 22 (représenté par des flèches pleines) s'échappe du stator 18 par les conduits d'évacuation 29, 30, 31 et 32, le fluide circulant dans l'entrefer de la machine électrique 13, dans les canaux longitudinaux 24 et les conduits d'évacuation.

La section de passage de fluide des conduits d'évacuation est choisie de manière à modifier la distribution de température dans la masse magnétique 22.

La section des conduits d'évacuation est choisie par exemple pour que la température au sein de la masse magnétique soit sensiblement uniforme au régime nominal de la machine électrique 13 afin de réduire la température d'au moins un point chaud du stator 18 situé généralement dans une zone centrale du stator.

Chaque conduit 29, 30, 31 et 32 peut être relié à une pluralité d'ouvertures 33, 34, 35 et 36 disposées sur un diamètre de la carcasse statorique 21.

Les ouvertures 33, 34, 35 et 36 sont réparties sur une même génératrice de la masse magnétique 22 et peuvent être de section identique ou différente.

En variantes, les ouvertures 33, 34, 35 et 36 sont réparties sur plusieurs génératrices disposées par exemple uniformément sur un diamètre de la carcasse statorique.

Les distanceurs 28 sont de tailles différentes de sorte que les conduits d'évacuation 29, 30, 31 et 32 sont de tailles différentes.

Chaque ouverture 33, 34, 35 et 36 est sensiblement égale ou supérieure à la section du conduit d'évacuation relié à ladite ouverture.

Le stator 18 comprend en outre un collecteur 37.

Les branches 38, 39, 40 et 41 du collecteur 37 sont reliées à des ouvertures 33, 34, 35 et 36 respectives différentes.

La surface de passage du fluide de chaque branche 38, 39, 40 et 41 est sensiblement égale ou supérieure à la surface de passage du fluide de l'ouverture reliée à ladite branche.

Le collecteur 37 comprend une sortie 42 pour évacuer le fluide du stator.

Chaque branche 38, 39, 40 et 41 comprend un premier moyen de régulation configuré pour contrôler le débit de fluide s'écoulant à travers ladite branche.

Chaque premier moyen de régulation peut comprendre une vanne de régulation ou une section de passage de fluide calibrée à une valeur prédéterminée par exemple pour une pression prédéterminée ou une température prédéterminée.

Par exemple, une première et deuxième branches 38 et 39 comprennent chacune une vanne de régulation 43, 44, et les troisième et quatrième 40 et 41 branches comprennent chacune une section de passage de fluide calibrée.

En fonction de la nature du fluide entrant dans la section de compression 12, la modification des sections de passage de fluide des vannes 43 et 44 permet d'adapter la distribution de température dans le stator 18, par exemple pour limiter l'amplitude des points chauds au sein de la masse magnétique de façon à limiter l'échauffement des bobines pour augmenter l'efficacité de la machine électrique tournante.

En outre, si le débit de fluide injecté par les moyens de refroidissement 14 n'est pas identique de part et d'autre du stator, les vannes 43 et 44 permettent d'équilibrer les débits injectés par les moyens 14.

De plus, lorsque le motocompresseur intégré est utilisé pour comprimer un fluide extrait par exemple d'un champ de gaz, selon la profondeur de gaz et la saison, les caractéristiques du fluide fluctuent telles que la température, la pression et la composition du fluide. Comme le stator est par exemple refroidi par une fraction du fluide sortant de la section de compression 12, les sections de passage de fluide des branches 38 à 41 permettent de prendre en compte la modification du fluide pour assurer notamment un refroidissement optimal du stator.

Lorsqu'au moins l'une des branches 38 à 41 est équipée d'une vanne de régulation, selon le niveau de puissance électrique produit par la machine électrique tournante, la puissance de refroidissement est adaptée en temps réel permettant de diminuer la fraction de fluide prélevée à la sortie et la fraction de fluide chaud injectée en entrée du motocompresseur de manière à augmenter le rendement du motocompresseur.

Dans ce mode de réalisation, le stator comprend en outre un deuxième et un troisième collecteurs 37a et 37b (visible sur la figure 4) dont les branches 38a et 38b sont reliées à des ouvertures 33a et 33b situées dans le même plan que l'ouverture 33.

Les collecteurs 37a et 37b comprennent une sortie 42a, 42b pour évacuer le fluide hors du stator.

Bien entendu, les collecteurs 37a et 37b sont reliés à une pluralité d'ouvertures situées sur une même génératrice que les ouverture 33a et 33b.

La branche 38a du deuxième collecteur 37a comprend une deuxième vanne de régulation 43a et la branche 38b du troisième collecteur 37b comprend une section de passage de fluide calibrée à une valeur prédéterminée par exemple pour une pression et une température prédéterminées.

En variante, les collecteurs 37, 37a et 37b sont remplacés chacun par une première chambre collectrice s'étendant selon la génératrice sur laquelle sont disposées les ouvertures et collectant le fluide s'écoulant à travers chaque ouverture. Cette chambre est disposée selon la génératrice de la culasse statorique.

Selon une autre variante, les collecteurs 37, 37a et 37b sont remplacés chacun par au moins deux premières chambres collectrices identiques ou non s'étendant selon la génératrice sur laquelle sont disposées les ouvertures et collectant le fluide s'écoulant à travers chaque ouverture, chacune des premières chambres collectant le fluide d'au moins une ouverture, le nombre d'ouvertures reliées à chacune des premières chambres étant identique ou non. Les premières chambres sont disposées selon la génératrice de la culasse statorique.

Chaque première chambre collectrice comprend une sortie pour évacuer le fluide hors du stator et un premier moyen de régulation configuré pour contrôler le débit de fluide circulant par la ladite sortie.

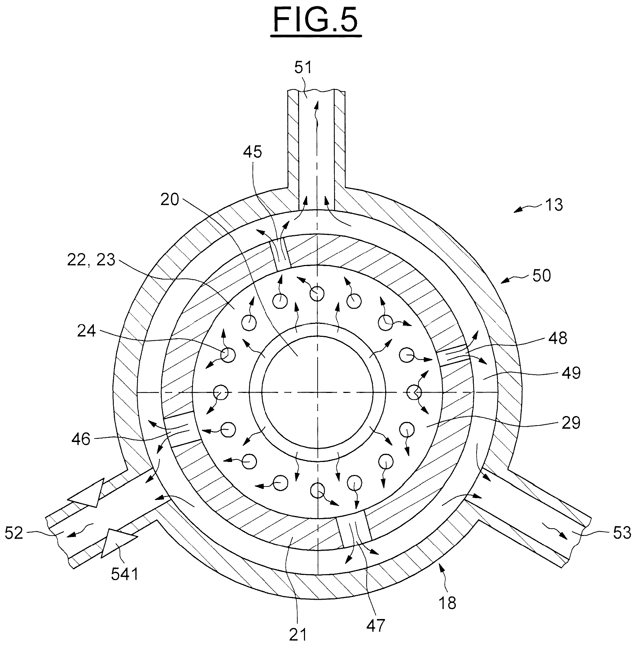

La figure 5 illustre une coupe radiale selon la direction IV-IV d'un deuxième mode de réalisation de la machine électrique tournante 13.

On retrouve le stator 18 comprenant la carcasse statorique 21, la masse magnétique 22 comprenant les canaux longitudinaux 24, et le rotor 20.

Le stator 18 diffère du stator illustré aux figures 3 et 4 en ce qu'il comprend quatre ouvertures d'évacuation 45, 46, 47 et 48 reliées à chaque conduit d'évacuation 29, et une deuxième chambre collectrice 50 englobant la carcasse 21 et collectant le fluide s'écoulant à travers chaque ouverture 45 à 48.

L'espace entre la carcasse statorique 21 et la deuxième chambre collectrice 50 forme un conduit d'écoulement 49.

Les ouvertures peuvent être de section identique ou différente.

La deuxième chambre 50 comprend par exemple trois sorties 51 à 53 pour évacuer le fluide hors du stator.

En variante, la deuxième chambre collectrice 50 peut comprendre une seule sortie, deux sorties ou plus de trois sorties.

En variante, le stator 18 comprend autant de deuxièmes chambres collectrices que de conduits d'écoulement de sorte que les ouvertures communiquant avec un conduit d'écoulement soient reliées chacune à l'une des deuxièmes chambres collectrices.

Chaque sortie 51 à 53 comprend un deuxième moyen de régulation pour contrôler le débit de fluide circulant à travers ladite deuxième sortie, le deuxième moyen de régulation comprenant une vanne de régulation ou une section de passage de fluide calibrée à une valeur prédéterminée par exemple pour une pression prédéterminée ou une température prédéterminée.

Par exemple, une première 51 et une troisième 53 sorties comprennent une section de passage de fluide calibrée à une valeur prédéterminée pour une pression et une température prédéterminées, et la deuxième sortie 52 comprend une vanne de régulation 541, les sections de passage des sorties 51 et 53 pouvant être identiques ou différentes.

Comme décrit précédemment, les sections calibrées et la vanne de régulation 541 permettent de modifier la répartition du profil de température dans la masse magnétique, par exemple dans la direction circonférentielle.

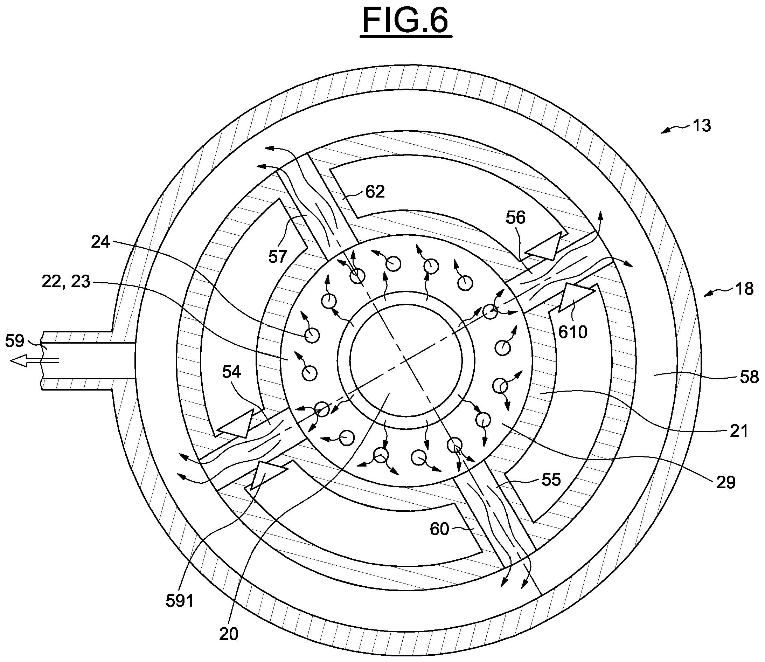

On se réfère à la figure 6 qui illustre une coupe radiale selon la direction IV-IV d'un troisième mode de réalisation de la machine électrique tournante 13.

On retrouve le stator 18 comprenant la carcasse statorique 21, la masse magnétique 22, les canaux longitudinaux 24, et le rotor 20.

Le stator 18 diffère du stator illustré aux figures 3 et 4 en ce qu'il comprend quatre ouvertures d'évacuation 54 à 57 reliées à chacune au conduit d'évacuation 29, et une deuxième chambre collectrice 58 englobant la carcasse 21 et collectant le fluide s'écoulant à travers chaque ouverture 54 à 57.

Les ouvertures peuvent être de sections identiques ou différentes.

La deuxième chambre 58 comprend par exemple une sortie 59 pour évacuer le fluide hors du stator.

En variante, la deuxième chambre collectrice 58 peut comprendre deux sorties ou plus.

En variante, le stator 18 comprend autant de deuxièmes chambres collectrices que de conduits d'écoulement de sorte que les ouvertures communiquant avec un conduit d'écoulement soient reliées à l'une des deuxièmes chambres collectrices.

Chaque ouverture 54 à 57 est reliée à la deuxième chambre collectrice 58 par l'intermédiaire du premier moyen de régulation.

Par exemple, une première 54 et troisième 56 ouvertures sont reliées par des vannes de régulation 591 et 610 à la deuxième chambre 58, et des deuxième 55 et quatrième 57 ouvertures sont reliées à la deuxième chambre 58 par l'intermédiaire de sections de passage 60 et 62 de fluide calibrées.

Comme décrit précédemment, les sections calibrées et les vannes de régulation permettent de modifier la répartition du profil de température dans la masse magnétique.

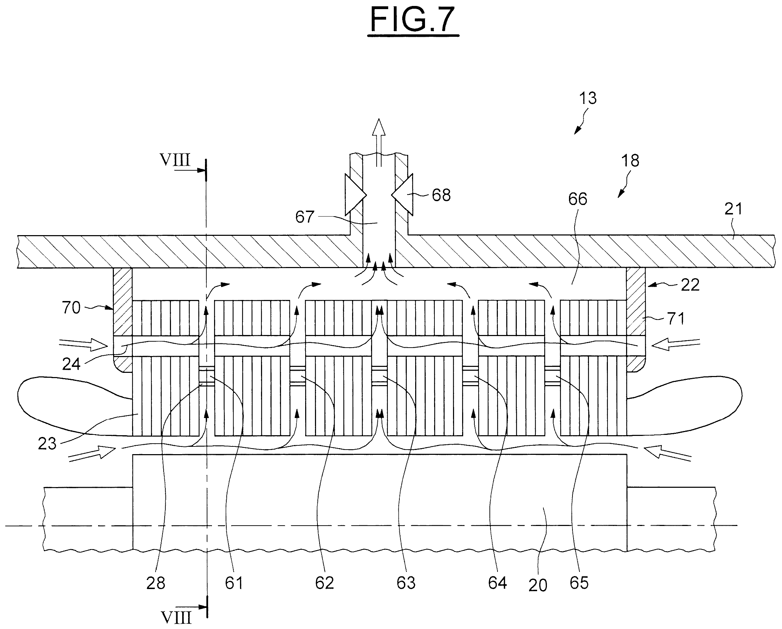

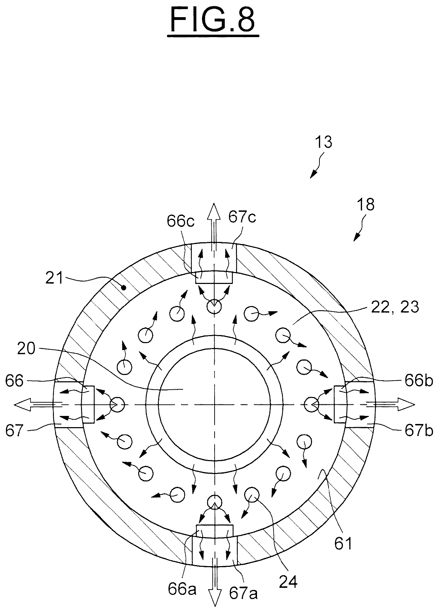

Les figures 7 et 8 illustrent une coupe longitudinale et une coupe radiale selon la direction VIII-VIII d'un exemple de réalisation de la machine électrique tournante 13 non compris dans l'invention revendiquée.

On retrouve le stator 18 comprenant la masse magnétique 22 comportant les canaux 24, la carcasse statorique 21, les distanceurs 28, et le rotor 20.

Les tôles magnétiques 23 et les distanceurs 28 forment cinq conduits d'évacuation 61 à 65 débouchant sur une rainure longitudinale 66 formée par les tôles magnétiques.

La rainure 66 canalise le fluide des conduits d'évacuation 61 à 65 vers une ouverture 67 comprenant par exemple le premier moyen de régulation, tel qu'une vanne de régulation 68.

Dans ce mode de réalisation, la masse magnétique comporte à chacune de ses extrémités un plateau de serrage 70 et 71 maintenant les tôles magnétiques compactées, les plateaux de serrage 70 et 71 bouchant les extrémités des rainures 66 pour empêcher le fluide de s'échapper par les extrémités de la masse magnétique.

Dans ce mode de réalisation, le conduit d'évacuation 61 est relié à quatre rainures 66, 66a, 66b, 66c débouchant chacune sur une ouverture 67, 67a, 67b, 67c.

En variante, chaque conduit débouche sur au moins une rainure pour évacuer le fluide.

Selon encore une autre variante, une ou plusieurs des ouvertures peuvent comprendre un premier moyen de régulation identique ou différent.

Le fluide est injecté dans la machine électrique tournante 13 à une pression par exemple supérieure à 1.2 bar, le fluide étant par exemple un fluide de refroidissement.

## Revendications

1. Stator (18) pour machine électrique tournante comprenant une carcasse statorique (21) et une masse magnétique cylindrique (22) insérée dans la carcasse statorique, la masse magnétique comportant une pluralité d'empilements de tôles magnétiques (23) compactées et des canaux longitudinaux (24) répartis uniformément sur au moins un diamètre de la masse magnétique, les canaux débouchant de chaque côté de la masse magnétique, au moins trois paquets de tôles magnétiques compactées étant séparés par des distanceurs (28) formant deux conduits d'évacuation (29, 30, 31, 32) s'étendant circonférentiellement et radialement entre la carcasse statorique et un logement central (19) du stator destiné à accueillir un rotor (20) de la machine électrique tournante et communiquant avec les canaux, la carcasse statorique comprenant au moins deux ouvertures d'évacuation (33, 34, 35, 36) reliées à des conduits différents de sorte qu'un fluide injecté de part et d'autre de la masse magnétique s'échappe du stator par les conduits d'évacuation, la section de passage de fluide des conduits d'évacuation étant configurée pour modifier la distribution de température dans la masse magnétique, **caractérisé en ce que** les distanceurs (28) sont de tailles différentes de sorte que les conduits d'évacuation (29, 30, 31, 32) sont de tailles différentes, chaque ouverture d'évacuation (33, 34, 35, 36) étant sensiblement égale ou supérieure à la section du conduit d'évacuation relié à ladite ouverture.

2. Stator selon la revendication 1, dans lequel chaque conduit (29, 30, 31, 32) est relié à une pluralité d'ouvertures d'évacuation (33, 34, 35, 36) disposées sur un diamètre de la carcasse statorique (21).

3. Stator selon la revendication 2, dans lequel les ouvertures d'évacuation (33, 34, 35, 36) sont réparties selon au moins une génératrice de la carcasse statorique (21).

4. Stator selon la revendication 3, dans lequel les génératrices sont disposées uniformément sur un diamètre de la carcasse statorique (21).

5. Stator selon l'une des revendications 1 à 4, dans lequel l'épaisseur d'au moins un paquet de tôles magnétiques (23) est différente de l'épaisseur des autres paquets de tôles magnétiques.

6. Stator selon l'une des revendications 1 à 5, comprenant en outre au moins un collecteur (37) ayant des branches (38, 39, 40, 41) reliées à des ouvertures d'évacuation (33, 34, 35, 36) différentes disposées sur une même génératrice de la carcasse statorique (21), la surface de passage de fluide de chaque branche étant sensiblement égale ou supérieure à la surface de passage de fluide l'ouverture reliée à ladite branche, chaque branche comprenant un premier moyen de régulation (43,44,68,591,610) pour contrôler le débit de fluide s'écoulant à travers ladite branche et le collecteur comprenant une sortie pour évacuer le fluide du stator.

7. Stator selon l'une des revendications 1 à 5, comprenant au moins une première chambre collectrice s'étendant selon une direction longitudinale et collectant le fluide s'écoulant à travers chaque ouverture d'évacuation (33, 34, 35, 36) disposée selon une même génératrice de la masse magnétique (22), la première chambre collectrice comprenant une sortie pour évacuer le fluide hors du stator, la sortie comprenant un premier moyen de régulation (43,44,68,591,610) pour contrôler le débit de fluide circulant par ladite sortie.

8. Stator selon l'une des revendications 1 à 5, comprenant une deuxième chambre collectrice (58, 50) englobant la carcasse statorique (21) et configurée pour collecter le fluide s'écoulant à travers chaque ouverture d'évacuation (33, 34, 35, 36, 45, 46, 47, 48), la deuxième chambre comprenant au moins une sortie (51, 52, 53) pour évacuer le fluide hors du stator.

9. Stator selon la revendication 8, dans lequel chaque ouverture d'évacuation (45, 46, 47, 48) est relié à la deuxième chambre collectrice (58) par l'intermédiaire d'un premier moyen de régulation (43,44,68,591,610) pour contrôler le débit de fluide circulant à travers ladite ouverture.

10. Stator selon l'une des revendications 8 et 9, dans lequel la deuxième chambre collectrice (58) comprend au moins une deuxième sortie (51, 52, 53) comprenant un deuxième moyen de régulation (541) pour contrôler le débit de fluide circulant à travers la deuxième sortie.

11. Stator selon l'une quelconque des revendications 1 à 10, dans lequel le premier moyen de régulation (43,44,68,591,610) et le cas échéant le deuxième moyen de régulation (541) comprennent chacun une vanne de régulation (43, 44, 541, 591, 610, 68) ou une section de passage (60, 62) de fluide calibrée à une valeur prédéterminée pour une pression prédéterminée ou une température prédéterminée.

12. Machine électrique tournante (13) comprenant un stator (18) selon l'une des revendications 1 à 11.

13. Motocompresseur intégré (10) comprenant un carter étanche contenant une section de compression et une machine électrique tournante (13) selon la revendication 12 entraînant la section de compression.

## Patentansprüche

1. Stator (18) für eine rotierende elektrische Maschine, umfassend einen Statorkörper (21) und eine in den Statorkörper eingesetzte zylindrische Magnetmasse (22), wobei die Magnetmasse eine Vielzahl von Stapeln verdichteter Magnetbleche (23) und gleichmäßig über mindestens einen Durchmesser der Magnetmasse verteilter Längskanäle (24) umfasst, wobei die Kanäle auf jeder Seite der Magnetmasse auslaufen, wobei mindestens drei Pakete verdichteter Magnetbleche durch Abstandshalter (28) getrennt sind, die zwei sich umlaufend und radial zwischen dem Statorgehäuse und einem mittleren Gehäuse (19) des Stators erstreckende Abflussleitungen (29, 30, 31, 32) bilden, die zur Aufnahme eines Rotors (20) der rotierenden elektrischen Maschine bestimmt sind und mit den Kanälen in Verbindung stehen, wobei das Statorgehäuse mindestens zwei Abflussöffnungen (33, 34, 35, 36) umfasst, die mit unterschiedlichen Leitungen verbunden sind, sodass ein auf beiden Seiten der Magnetmasse eingespritztes Fluid über die Abflussleitungen aus dem Stator austritt, wobei der Fluiddurchlassquerschnitt der Abflussleitungen so eingerichtet ist, dass er die Temperaturverteilung in der Magnetmasse ändert, **dadurch gekennzeichnet, dass** die Abstandshalter (28) unterschiedlich groß sind, sodass die Abflussleitungen (29, 30, 31, 32) unterschiedlich groß sind, wobei jede Abflussöffnung (33, 34, 35, 36) im Wesentlichen gleich oder größer als der Querschnitt der mit der Öffnung verbundenen Abflussleitung ist.

2. Stator nach Anspruch 1, wobei jede Leitung (29, 30, 31, 32) mit einer Vielzahl von Abflussöffnungen (33, 34, 35, 36) verbunden ist, die an einem Durchmesser des Statorgehäuses (21) angeordnet sind.

3. Stator nach Anspruch 2, wobei die Abflussöffnungen (33, 34, 35, 36) auf mindestens einen Generator des Statorgehäuses (21) verteilt sind.

4. Stator nach Anspruch 3, wobei die Generatoren gleichmäßig auf einem Durchmesser des Statorgehäuses (21) angeordnet sind.

5. Stator nach einem der Ansprüche 1 bis 4, wobei sich die Dicke mindestens eines Pakets verdichteter Magnetbleche (23) von der Dicke der anderen Pakete verdichteter Magnetbleche unterscheidet.

6. Stator nach einem der Ansprüche 1 bis 5, ferner umfassend mindestens einen Kollektor (37) mit Zweigen (38, 39, 40, 41), die mit unterschiedlichen Abflussöffnungen (33, 34, 35, 36) verbunden sind, die an einem gleichen Generator des Statorgehäuses (21) angeordnet sind, wobei die Fluiddurchgangsfläche jedes Zweiges im Wesentlichen gleich oder größer ist als die Fluiddurchgangsfläche der mit dem Zweig verbundenen Öffnung, wobei jeder Zweig ein erstes Regelmittel (43,44,68,591,610) zum Steuern des Fluidflusses umfasst, der durch diesen Zweig und den Verteiler fließt, der einen Auslass zum Abführen des Fluids aus dem Stator umfasst.

7. Stator nach einem der Ansprüche 1 bis 5, umfassend mindestens eine erste Sammelkammer, die sich in Längsrichtung erstreckt und das durch jede Abflussöffnung (33, 34, 35, 36) fließende Fluid aufnimmt, die entlang desselben Generators der Magnetmasse (22) angeordnet ist, wobei die erste Sammelkammer einen Auslass umfasst, um das Fluid aus dem Stator abzuführen, wobei der Auslass ein erstes Regelmittel (43, 44, 68, 591, 610) umfasst, um die Strömung des durch den Auslass zirkulierenden Fluids zu steuern.

8. Stator nach einem der Ansprüche 1 bis 5, umfassend eine zweite Sammelkammer (58, 50), die das Statorgehäuse (21) umschließt und so eingerichtet ist, dass sie das Fluid aufnimmt, das durch jede Abflussöffnung (33, 34, 35, 36, 45, 46, 47, 48) fließt, wobei die zweite Kammer mindestens einen Auslass (51, 52, 53) umfasst, um das Fluid aus dem Stator abzuführen.

9. Stator nach Anspruch 8, wobei jede Abflussöffnung (45, 46, 47, 48) über ein erstes Regelmittel (43,44,68,591,610) mit der zweiten Sammelkammer (58) verbunden ist, um den Durchfluss des durch die Öffnung zirkulierenden Fluids zu steuern.

10. Stator nach einem der Ansprüche 8 und 9, wobei die zweite Sammelkammer (58) mindestens einen zweiten Auslass (51, 52, 53) umfasst, der ein zweites Regelmittel (541) zur Steuerung des durch den zweiten Auslass zirkulierenden Fluidstroms umfasst.

11. Stator nach einem der Ansprüche 1 bis 10, wobei das erste Regelmittel (43,44,68,591,610) und gegebenenfalls das zweite Regelmittel (541) jeweils ein Regelventil (43, 44, 541, 591, 610, 68) umfassen, oder einen Fluiddurchlassquerschnitt (60, 62), der auf einen vorbestimmten Wert für einen vorbestimmten Druck oder eine vorbestimmte Temperatur kalibriert ist.

12. Rotierende elektrische Maschine (13), die einen Stator (18) nach einem der Ansprüche 1 bis 11 umfasst.

13. Integrierter Motorkompressor (10), umfassend einen dichten Kasten, der einen Verdichtungsquerschnitt und eine rotierende elektrische Maschine (13) nach Anspruch 12, die den Verdichtungsquerschnitt antreibt, enthält.

## Claims

1. A stator (18) for a rotating electric machine comprising a stator housing (21) and a cylindrical magnetic mass (22) inserted into the stator housing, the magnetic mass including a plurality of stacks of compressed magnetic sheets (23) and longitudinal channels (24) uniformly distributed over at least one diameter of the magnetic mass, the channels opening on either side of the magnetic mass, with at least three packets of compacted magnetic sheets separated by spacers (28) forming two discharge ducts (29, 30, 31, 32) that extend circumferentially and radially between the stator housing and a central housing (19) of the stator designed to accommodate a rotor (20) of the rotating electric machine and communicating with the channels, the stator housing including at least two discharge openings (33, 34, 35, 36) connected to different ducts, allowing a fluid injected on either side of the magnetic mass to escape from the stator through the discharge ducts, the fluid passage area of the discharge ducts being configured to modify the temperature distribution within the magnetic mass, **characterized in that** the spacers (28) are of different sizes, resulting in the discharge ducts (29, 30, 31, 32) being of varying sizes, with each discharge opening (33, 34, 35, 36) being substantially equal to or greater than the cross-section of the discharge duct connected to that opening.

2. The stator of claim 1, in which each conduit (29, 30, 31, 32) is connected to multiple discharge openings (33, 34, 35, 36) arranged along a diameter of the stator housing (21).

3. The stator according to claim 2, wherein the discharge openings (33, 34, 35, 36) are distributed along at least one generator of the stator housing (21).

4. The stator according to claim 3, wherein the generators are arranged uniformly over a diameter of the stator housing (21).

5. The stator according to any of claims 1 to 4, in which the thickness of at least one stack of magnetic sheets (23) differs from the thickness of the other stacks of magnetic sheets.

6. The stator according to any one of claims 1 to 5, further comprising at least one manifold (37) having branches (38, 39, 40, 41) connected to different discharge openings (33, 34, 35, 36) arranged on the same generator of the stator housing (21), with the fluid passage area of each branch being substantially equal to or greater than the fluid passage area of the opening connected to that branch, each branch including a first control means (43, 44, 68, 591, 610) for regulating the flow of fluid through that branch, and the manifold having an outlet for discharging the fluid from the stator.

7. Stator according to one of claims 1 to 5, comprising at least one first collecting chamber extending in a longitudinal direction and collecting the fluid flowing through each discharge opening (33, 34, 35, 36) arranged along the same generator line of the magnetic mass (22), the first collecting chamber having an outlet for discharging the fluid from the stator, the outlet including a first control means (43, 44, 68, 591, 610) to regulate the flow of fluid passing through said outlet.

8. The stator according to any one of claims 1 to 5, which includes a second collecting chamber (58, 50) surrounding the stator housing (21) and designed to collect the fluid flowing through each discharge opening (33, 34, 35, 36, 45, 46, 47, 48), with the second chamber having at least one outlet (51, 52, 53) to discharge the fluid from the stator.

9. The stator according to claim 8, in which each discharge opening (45, 46, 47, 48) is connected to the second collecting chamber (58) through a first regulating means (43, 44, 68, 591, 610) to control the flow of fluid passing through said opening.

10. The stator according to one of claims 8 and 9, in which the second collecting chamber (58) includes at least one second outlet (51, 52, 53) that features a second regulating means (541) for controlling the flow of fluid passing through the second outlet.

11. The stator according to any of claims 1 to 10, wherein the first control means (43, 44, 68, 591, 610) and, if applicable, the second control means (541) each include a control valve (43, 44, 541, 591, 610, 68) or a fluid passage section (60, 62) calibrated to a predetermined value for a specified pressure or temperature.

12. A rotating electric machine (13) including a stator (18) as described in any one of claims 1 to 11.

13. An integrated motor compressor (10) comprising a sealed housing containing a compression section and a rotating electric machine (13) according to claim 12 driving the compression section.
